# EUROPÄISCHE PATENTSCHRIFT

(11) **EP 2 723 465 B1**
(45) Veröffentlichungstag und Bekanntmachung des Hinweises auf die Patenterteilung: **14.02.2018**
(21) Anmeldenummer: 12710873.6
(22) Anmeldetag: 15.03.2012
(51) Int. Cl.: B01D 29/21, B01D 29/96

(54) **FILTERVORRICHTUNG**
FILTER APPARATUS
DISPOSITIF DE FILTRAGE

(30) Priorität: 25.06.2011 DE 102011105555
(43) Veröffentlichungstag der Anmeldung: 30.04.2014
(60) Teilanmeldung: 17198975.9
(73) Patentinhaber: Hydac Filtertechnik GmbH, 66280 Sulzbach/Saar (DE)
(72) Erfinder: SANN, Norbert, 66292 Riegelsberg (DE); BRAUNE, Martin, 66130 Fechingen (DE)
(74) Vertreter: Bartels, Martin Erich Arthur
(86) Internationale Anmeldenummer: PCT/EP2012/001154
(87) Internationale Veröffentlichungsnummer: WO 2013/000523

(56) Entgegenhaltungen:
- EP-A1- 0 692 292
- WO-A1-2010/102690
- WO-A1-2011/047754
- WO-A2-2010/056711
- US-A1- 2002 144 937
- US-A1- 2006 054 547
- US-A1- 2010 025 317

## Beschreibung

### Filtervorrichtung

Die Erfindung betrifft eine Filtervorrichtung, mit den Merkmalen im Oberbegriff von Anspruch 1.

Filtervorrichtungen dieser Art sind Stand der Technik. Sie finden in unterschiedlichen Auslegungen, was Bauart, Baugröße und/oder Druckstufe anbelangt, weit verbreitete Anwendung zur Filtration verschiedenster technischer Fluide, wie Hydraulikflüssigkeiten, Kühlschmiermittel, Kraftstoffe, Schmieröle und dergleichen. Da Betriebsstörungen oder gar Ausfälle der Filtervorrichtungen zu Beschädigungen oder der Zerstörung nachgeordneter Systeme führen können, was beträchtliche wirtschaftliche Schäden verursachen kann, kommt der Betriebssicherheit solcher Filtervorrichtungen große Bedeutung zu. Bei Betrieb solcher Filtervorrichtungen muss daher nicht nur darauf geachtet werden, dass der Filtrationsvorgang mit einem betriebsbereiten, im Filtergehäuse befindlichen Filterelement durchgeführt wird, sondern es muss aus gewährleistet sein, dass hierbei ein Filterelement benutzt wird, dessen Spezifikationen, beispielsweise hinsichtlich Filterfeinheit, Zuordnung zur entsprechenden Druckstufe, Strömungswiderstand und dergleichen, genau den Erfordernissen beim Betrieb des zugeordneten Systems entspricht.

Die WO 2011/047754 A1 und die WO 2010/102690 A1 offenbaren jeweils eine Filtervorrichtung mit einem Filtergehäuse, das zumindest ein Filterelement aufnimmt, das einen von einem Filtermedium umgebenen inneren Filterhohlraum aufweist, wobei im Gehäuse eine Elementaufnahme vorhanden ist, die mit dem in Funktionsposition befindlichen Filterelement zusammenwirkt, wobei die Elementaufnahme einen vorspringenden Aufnahmeteil aufweist, dessen äußere Gestalt an die Form einer Öffnung, die sich an dem an die Elementaufnahme festzulegenden Ende des betreffenden Filterelements befindet, derart angepasst ist, dass der Aufnahmeteil die Öffnung des in Funktionsposition befindlichen Filterelements passend durchgreift. Bei der WO 2011/047754 A1 weist die Elementaufnahme eine Gestaltsunregelmäßigkeit auf, die durch einen gewellten Abschnitt ausgebildet ist. Bei der WO 2010/102690 A1 sind an einem Rohrstutzen seitliche Längsrippen vorgesehen, die endseitig mit einer Abschrägung versehen sind und in breitere Ausnehmungen eines Filterelements eingreifen können.

Im Hinblick auf diese Problematik stellt sich die Erfindung die Aufgabe, eine Filtervorrichtung zur Verfügung zu stellen, die eine erhöhte Sicherheit gegen Fehlfunktionen beim Filtriervorgang bietet, indem sichergestellt ist, dass nur ein geeignetes Filterelement in die Filtervorrichtung einsetzbar ist.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass der Aufnahmeteil die Form eines Dornes hat und das Filterelement einen Aufnahmeraum in der Art eines Domes aufweist, dass der Dorn und der Aufnahmeraum jeweils ebene Flächenteile aufweisen und dass diese ebenen Flächenteile des Dornes zu einem Ende hin in einer der Verjüngung des Aufnahmeraums entsprechenden Weise konvergieren, so dass bei im Aufnahmeraum aufgenommenem Dorn Innenflächen des Domes passend an den ebenen Flächenteilen des Dornes anliegen.

Es ist ferner vorgesehen, dass die im Filtergehäuse zur Festlegung des betreffenden Filterelements vorgesehene Elementaufnahme einen vorspringenden Aufnahmeteil aufweist, dessen äußere Gestalt an die Form einer Öffnung, die sich an dem an der Elementaufnahme festzulegenden Ende des betreffenden Filterelements befindet, derart angepasst ist, dass der Aufnahmeteil die Öffnung des in Funktionsposition befindlichen Filterelements passend durchgreift. Dadurch ist sichergestellt, dass im Filtergehäuse lediglich ein Filterelement in die Funktionsposition gebracht werden kann, das den passenden Durchgriff des von der Elementaufnahme vorspringenden Aufnahmeteils durch eine der Gestalt des Aufnahmeteils angepasste Öffnung hindurch gestattet. Somit ist die Gefahr vermieden, dass Filterelemente zum Einsatz gebracht werden können, die den jeweiligen Spezifikationen hinsichtlich Filterfeinheit, zulässiger Druckstufe und dergleichen nicht entsprechen, was zu einer Erhöhung der Betriebssicherheit führt.

Der Aufnahmeteil der Elementaufnahme ist derart angeordnet, dass er sich bei der Funktionsposition des betreffenden Filterelements in einen an einer zugeordneten Endkappe desselben befindlichen Aufnahmeraum hinein erstreckt, der in den inneren Filterhohlraum hinein ragt. Bei dieser Bauweise würde bei einem Versuch, irrtümlicherweise ein Filterelement einzusetzen, das an seiner Elementaufnahme keinen Aufnahmeraum für den sich ins Innere des Filterhohlraums erstreckenden Aufnahmeteil aufweist, die Einsetzbewegung des Filterelements vor Erreichen der Funktionsposition durch Anlage des Aufnahmeteils an der Endkappe blockiert und so der Bedienungsperson eindeutig signalisiert, dass er ein "falsches" Filterelement einsetzen will.

Vorzugsweise ist die Anordnung so getroffen, dass zumindest der für den Eingriff in die Öffnung des Aufnahmeraums des Filterelements vorgesehene Teil des Aufnahmeteils einen unrunden Umriss besitzt.

Mit besonderem Vorteil kann die Anordnung so getroffen sein, dass der Dorn am Umfang ebene Flächenteile aufweist, die eine Querschnittsform mit vier geraden, einem Quadrat einbeschriebenen Seiten definieren, wobei sich die Größe des Querschnitts des Dornes zu dessen oberem, freien Ende hin verringert. Wegen des schlankeren freien Endes des Dornes lässt sich der Eingriff in den Dom besonders einfach und bequem bewerkstelligen.

Da bei der unrunden Gestalt des Dornes mit am Umfang befindlichen ebenen Flächenteilen und der entsprechenden, unrunden Form der Öffnung des Aufnahmedomes eine entsprechende relative Drehposition zwischen Filterelement und Dorn für dessen Eingriff in den Aufnahmedom erforderlich ist, ist bei besonders vorteilhaften Ausführungsbeispielen der Dorn auf einem an der Elementaufnahme befindlichen Schaft drehbar gelagert, der sich in eine zentrale Bohrung des Dornes erstreckt. Beim Zusammenbringen von Aufnahmedom und Dorn stellt sich dieser dank seines schlankeren freien Endes selbsttätig in die für das Zusammenfahren erforderliche Drehposition ein.

Bei besonders vorteilhaften Ausführungsbeispielen weist der Schaft einen Bund auf, der den daran anliegenden Dorn gegen eine vom betreffenden Filterelement weg gerichtete Axialbewegung sichert.

Zur Sicherung gegen ein in der anderen Richtung erfolgendes Abheben des Dornes vom Schaft kann ein auf dem Schaft befindlicher Sprengring in Zusammenwirkung mit einer in der zentralen Bohrung des Dornes befindlichen Rille eine axiale Sicherung bilden.

Der Schaft kann in eine verschließbare Ölablassöffnung des Filtergehäuses eingeschraubt sein, wodurch eine besonders einfache und kompakte Bauweise des Filtergehäuses resultiert.

Damit die Ölablassöffnung trotz des mit ihr verschraubten Schaftes ihre Ablassfunktion erfüllen kann, kann die Anordnung mit besonderem Vorteil so getroffen sein, dass der Schaft einen inneren Fluidweg zwischen der Außenseite des Bundes und der Ablassöffnung des Gehäuses aufweist, so dass auch bei eingeschraubtem Schaft durch Öffnen einer an der Ablassöffnung befindlichen Ablassschraube ein Ablassvorgang durchführbar ist.

Nachstehend ist die Erfindung anhand eines in der Zeichnung dargestellten Ausführungsbeispiels im Einzelnen erläutert. Es zeigen:
- Fig. 1: eine teilweise aufgeschnitten gezeichnete, perspektivische Ansicht eines Ausführungsbeispiels der erfindungsgemäßen Filtervorrichtung;
- Fig. 2: eine der Fig. 1 ähnliche Darstellung, wobei jedoch das in Fig. 1 gezeigte Ausführungsbeispiel des erfindungsgemäßen Filterelements in einem Filtergehäuse üblicher Bauweise eingebaut ist;
- Fig. 3: eine stark vergrößert und explosionsartig auseinandergezogen gezeichnete perspektivische Schrägansicht lediglich der Endkappe des Filterelements und der Elementaufnahme des Filtergehäuses des Ausführungsbeispiels von Fig. 1;
- Fig. 4 und 5: eine Seitenansicht bzw. einen Längsschnitt lediglich des Schaftes der Elementaufnahme von Fig. 3;
- Fig. 6 und 7: einen Längsschnitt bzw. eine Draufsicht lediglich eines als Aufnahmeteil der Elementaufnahme von Fig. 3 dienenden Dornes; und
- Fig. 8 und 9: perspektivische Schrägansichten lediglich der Endkappe des Filterelements, gesehen auf die Unterseite bzw. die Oberseite.

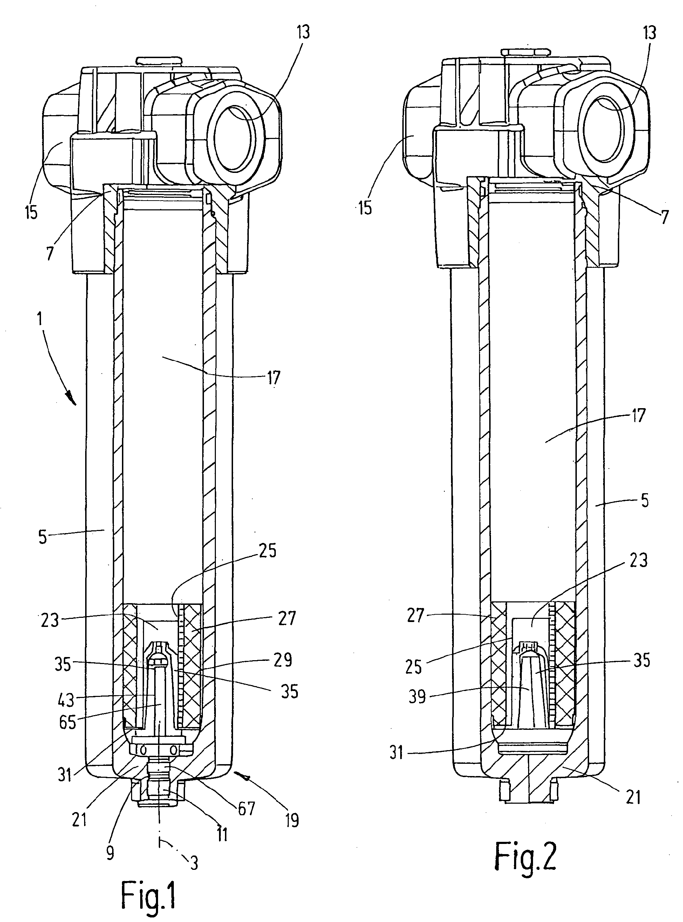

Die Fig. 1 zeigt ein Ausführungsbeispiel der erfindungsgemäßen Filtervorrichtung, das für einen Einsatz zur Filtration von unter einem erhöhten Druck stehenden Fluiden vorgesehen ist. Das Filtergehäuse 1, das eine Hochachse 3 definiert, weist ein zylindrisches Hauptteil 5 auf, mit dessem oberen Ende ein Kopfteil 7 verschraubt ist. Am unteren Ende ist das Hauptteil 5 bis auf eine Ablassöffnung 9 geschlossen, in deren Innengewinde eine Ablassschraube 11 eingeschraubt ist. Das obere Kopfteil 7 weist einen Anschluss 13 für zuströmendes Unfiltrat und einen Anschluss 15 für den Filtratausgang auf. Innerhalb des Kopfteils 7 befindliche Fluidwege, die dem einschlägigen Stand der Technik entsprechen und daher nicht näher dargestellt sind, verbinden die Anschlüsse 13 und 15 mit Rohseite und Reinseite des jeweiligen, im Gehäuse 1 aufgenommenen Filterelements 17, wobei, ebenfalls dem Stand der Technik entsprechend, eine Bypasseinrichtung im Kopfteil 7 im Bedarfsfall einen Nebenschluss zwischen den Anschlüssen 13 und 15 herstellt.

In der Zeichnung ist das Filtergehäuse 1 entlang der Längsachse 3 derart aufgeschnitten, dass die Außenseite des Filterelements 17 sichtbar ist, wobei letzteres in einem unteren Längenabschnitt, mit dem das Filterelement 17 an einer Elementaufnahme 19 am Boden 21 des Filtergehäuses 1 festgelegt ist, ebenfalls aufgeschnitten dargestellt ist. Dies gibt den Blick in den inneren, zur Hochachse 3 koaxialen Filterhohlraum 23 frei, der von einem fluiddurchlässigen Stützrohr 25 umgeben ist, auf dem wiederum ein einen Hohlzylinder bildendes Filtermedium 27 angeordnet ist. Dieses ist beim Filtrationsvorgang von seiner die Rohseite 29 bildenden Außenseite her zu dem die Reinseite bildenden Filterhohlraum 23 hin durchströmt.

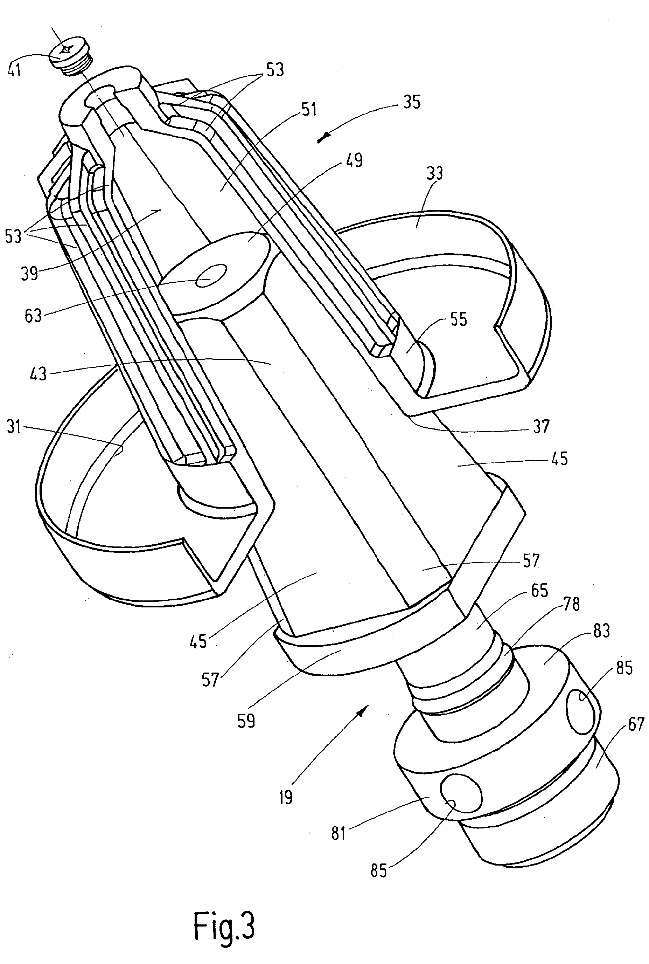

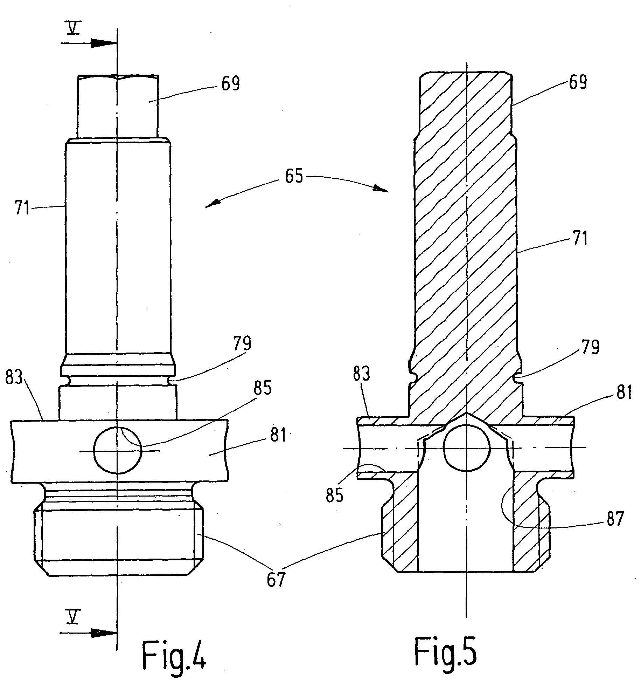

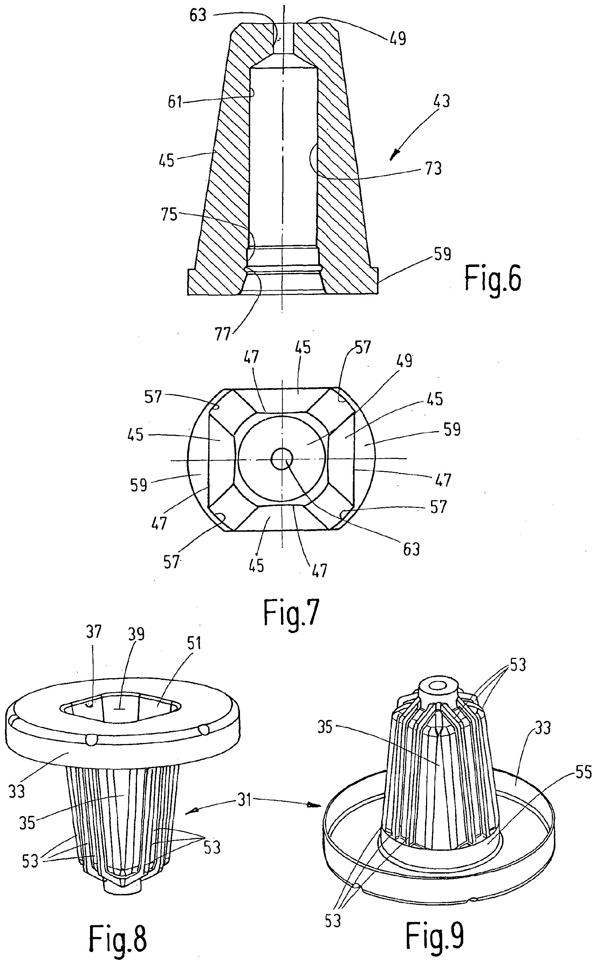

Nähere Einzelheiten der Elementaufnahme 19 des Filtergehäuses 1, die zur Festlegung des Filterelements 17 in seiner Funktionsposition, die in Fig. 1 dargestellt ist, dient und mit einer Endkappe 31 des Filterelements 17 zusammenwirkt, sind aus den Fig. 3 bis 9 deutlicher entnehmbar. Die Endkappe 31 weist in an sich bekannter Weise einen den zugeordneten Endbereich des Filtermediums 27 einfassenden vorstehenden Rand 33 auf. Ein wesentlicher Unterschied gegenüber üblichen Endkappen besteht darin, dass die Endkappe 31 als einstückiges Bestandteil einen zentral gelegenen, sich entlang der Hochachse 3 ins Innere des Filterelements 17 erstreckenden Körper aufweist, der die Gestalt eines umgekehrten Kelches oder eines Doms 35 besitzt, der sich von der endseitigen Öffnung 37 (s. insbes. Fig. 8) zum inneren Ende hin verjüngt, so dass der Dom 35 in der Art einer Hülse einen inneren Aufnahmeraum 39 bildet, der sich ebenfalls gegen das innere Ende hin verjüngt. Eine am inneren Ende befindliche Öffnung des Aufnahmeraums 39 ist durch eine Schraube 41 verschließbar. Anstelle der Schraube 41 kann auch ein Stopfen vorzugsweise aus Sintermetall hergestellt treten, der in die korrespondierende Öffnung eingetrieben werden kann. Der genannte Sintermetallwerkstoff weist ein gewisses Maß an Porosität auf, so dass mit dem dahingehenden Verschlussstopfen zum einen ein Druckausgleich beim Aufsetzen des Filterelementes erreichbar ist und ferner ist eine Art Kleinfilter realisiert, der innerhalb des Filters angeordnet auch noch feinste Partikelverschmutzungen herausfiltrieren kann. Insoweit könnte auch die Verschlussschraube 41 aus einem Sintermetallwerkstoff mit vorgebbarer Porosität ausgebildet sein.

Die Elementaufnahme 19 weist ein Aufnahmeteil in Form eines Dornes 43 auf, der bei in der Funktionsposition befindlichem Filterelement 17 innerhalb des Aufnahmeraums 39 des Domes 35 aufgenommen ist. Wie den Fig. 3, 6 und 7 entnehmbar ist, hat der Dorn 43 eine unrunde Gestalt, wobei in dem in den Aufnahmeraum 39 eingreifenden Längenabschnitt am Umfang des Dornes 43 ebene Flächenteile 45 vorhanden sind, durch die sich für den Dorn 43 eine Querschnittsform mit vier geraden Seiten 47 ergibt, die, siehe Fig. 7, einem Quadrat einbeschrieben sind. Diese ebenen Flächenteile 45 konvergieren zum Ende 49 hin in einer der Verjüngung des Aufnahmeraums 39 entsprechenden Weise, so dass bei im Aufnahmeraum 39 aufgenommenem Dorn 43 Innenflächen 51 des Domes 35 passend an den ebenen Flächenteilen 45 des Dornes 43 anliegen. An der Außenseite des Domes 35 erstrecken sich im Abstand voneinander verlaufende Längsrippen 53 (in den Zeichnungen nicht sämtliche beziffert) von einem für die Anlage des Stützrohres 25 vorgesehenen Bund 55 bis zum inneren Ende des Domes 35 hin.

Wie den Fig. 3, 6 und 7 entnehmbar ist, weist der Dorn 43 zwischen den ebenen Flächenteile 45 gerundete Verbindungsflächen 57 sowie an zwei gegenüberliegenden Seiten radial vorstehende Flanschteile 59 auf. Eine zentrale Bohrung 61 erstreckt sich im Dorn 43 von dem dickeren unteren Ende bis zu einer Ausgleichsbohrung 63 am verjüngten oberen Ende 49. Der Dorn 43 ist mit seiner zentralen Bohrung 61 auf einem Schaft 65 der Elementaufnahme 19 drehbar gelagert. Diese drehbare Lagerung des Dornes 43 erleichtert beim Einsetzen des Filterelements 17 in das Filtergehäuse 1 das Einfahren des unrunden Dornes 43 in den Aufnahmeraum 39 des Domes 35, weil sich aufgrund der verjüngten Gestalt des Dornes 43 dieser beim Zusammenfahren selbständig in die geeignete Drehposition einstellt. Der Schaft 65 weist am unteren Ende ein Außengewinde 67 auf, mit dem er in das Innengewinde der Ablassöffnung 9 des Filtergehäuses 1 eingeschraubt ist, wobei am oberen Ende des Schaftes 65 ein Außensechskant 69 für den Schraubvorgang vorgesehen ist. Mit seinem an den Sechskant 69 anschließenden kreiszylindrischen Längenabschnitt 71 ist der Schaft 65 in einem Lagerabschnitt 73 der zentralen Bohrung 61 des Dornes 43 passend drehbar gelagert. Die Bohrung 61 weist, wie aus Fig. 6 zu ersehen ist, am unteren Ende eine Erweiterung 75 auf, in der eine Rille 77 ausgebildet ist. Diese bildet in Zusammenwirkung mit einem Sprengring 78, der nur in Fig. 3 eingezeichnet ist und der in einer Rille 79 des Schaftes 65 sitzt, eine Sicherung gegen eine Axialbewegung des Dornes 43 in Richtung des Abziehens vom Dornschaft 65. Der Schaft 65 bildet mit dem Dorn 43 insoweit eine zweiteilige Baueinheit aus.

Unterhalb des in der Rille 79 sitzenden Sprengringes 78 weist der Schaft 65 einen eine radiale Erweiterung bildenden Bund 81 auf, der eine Anlagefläche 83 für die Sicherung des Dornes 43 gegen eine Axialbewegung nach unten bildet. Der Bund 81 weist zwischen Öffnungen 85 an seiner Außenseite und dem in die Ablassöffnung 9 des Gehäuses 1 einschraubbaren unteren Ende eine Fluidverbindung 87 auf, über die eine Entleerung des Gehäuses 1 bei entfernter Ablassschraube 11 möglich ist.

Die Fig. 2 zeigt eine Situation, bei der ein erfindungsgemäßes Filterelement 17, das mit einer Endkappe 31 versehen ist, die einen Dom 35 zur Bildung eines Aufnahmeraums 39 für einen Dorn 43, wie er als Elementaufnahme an einer erfindungsgemäßen Filtervorrichtung vorhanden ist, sich in Funktionsposition befindet. Bei der Darstellung von Fig. 2 ist jedoch, im Unterschied zu Fig. 1, das Filterelement 17 nicht in ein gemäß der Erfindung ausgebildetes Filtergehäuse 1 eingesetzt, sondern in ein Filtergehäuse üblicher Bauweise, das ein geschlossenes Bodenteil 21 ohne daran befindliche, mit einem vorspringenden Aufnahmeteil in Form eines Dornes ausgebildete Elementaufnahme aufweist. Gleichwohl ist, wie in Fig. 2 dargestellt, das erfindungsgemäß ausgebildete Filterelement 17 auch in ein solches, übliches Filtergehäuse in seine Funktionsposition einsetzbar.

Bei dem vorliegenden Ausführungsbeispiel ist die Elementaufnahme 19 durch Stahlteile in Form des Dornes 43 und des Schaftes 65 ausgebildet. Bei der Endkappe 31 des Filterelements 17 handelt es sich vorzugsweise um ein Druckgussteil aus einer Aluminium/Zink-Legierung. Die Endkappe 31 könnte alternativ aus einem Kunststoffwerkstoff pressgeformt sein.

## Patentansprüche

1. Filtervorrichtung mit einem Filtergehäuse (1), das zumindest ein Filterelement (17) aufnimmt, das einen von einem Filtermedium (27) umgebenen inneren Filterhohlraum (23) aufweist, wobei im Gehäuse (1) eine Elementaufnahme (19) vorhanden ist, die mit dem in Funktionsposition befindlichen Filterelement (17) zusammenwirkt, wobei die Elementaufnahme (19) einen vorspringenden Aufnahmeteil (43) aufweist, dessen äußere Gestalt an die Form einer Öffnung (37), die sich an dem an die Elementaufnahme (19) festzulegenden Ende des betreffenden Filterelements (17) befindet, derart angepasst ist, dass der Aufnahmeteil (43) die Öffnung (37) des in Funktionsposition befindlichen Filterelements (17) passend durchgreift, **dadurch gekennzeichnet, dass** der Aufnahmeteil die Form eines Dornes (43) hat und das Filterelement (17) einen Aufnahmeraum (39) in der Art eines Domes (35) aufweist, dass der Dorn (43) und der Aufnahmeraum (39) jeweils ebene Flächenteile (45) aufweisen und dass diese ebenen Flächenteile (45) des Domes (43) zu einem Ende (49) hin in einer der Verjüngung des Aufnahmeraums (39) entsprechenden Weise konvergieren, so dass bei im Aufnahmeraum (39) aufgenommenem Dorn (43) Innenflächen (51) des Domes (35) passend an den ebenen Flächenteilen (45) des Domes (43) anliegen.

2. Filtervorrichtung nach Anspruch 1, **dadurch gekennzeichnet, dass** der Dorn (43) am Umfang ebene Flächenteile (45) aufweist, die eine Querschnittsform mit vier geraden, einem Quadrat einbeschriebenen Seiten (47) definieren.

3. Filtervorrichtung nach einem der vorstehenden Ansprüche, **dadurch gekennzeichnet, dass** der Dorn (43) auf einem an der Elementaufnahme (19) befindlichen Schaft (65) drehbar gelagert ist, der sich in eine zentrale Bohrung (61) des Dornes (43) erstreckt.

4. Filtervorrichtung nach Anspruch 3, **dadurch gekennzeichnet, dass** der Schaft (65) einen Bund (81) aufweist, der den daran anliegenden Dorn (43) gegen eine vom betreffenden Filterelement (17) weg gerichtete Axialbewegung sichert.

5. Filtervorrichtung nach Anspruch 3 oder 4, **dadurch gekennzeichnet, dass** ein auf dem Schaft (65) befindlicher Sprengring (78) zusammen mit einer in der zentralen Bohrung (61) des Dornes (43) befindlichen Rille (77) diesen gegen ein Abheben vom Schaft (65) sichert.

6. Filtervorrichtung nach einem der Ansprüche 3 bis 5, **dadurch gekennzeichnet, dass** der Schaft (65) in eine verschließbare Ölablassöffnung (9) des Filtergehäuses (1) eingeschraubt ist.

7. Filtervorrichtung nach einem der Ansprüche 3 bis 6, **dadurch gekennzeichnet, dass** der Schaft (65) einen inneren Fluidweg (87) zwischen der Außenseite des Bundes (81) und der Ölablassöffnung (9) des Gehäuses (1) aufweist.

8. Filtervorrichtung nach einem der vorstehenden Ansprüche mit einem Filterelement zur, das an der Elementaufnahme (19) des betreffenden Filtergehäuses (1) festlegbar ist und das den inneren Filterhohlraum (23) umgebende Filtermedium (27) aufweist, **dadurch gekennzeichnet, dass** an dem an der Elementaufnahme (19) festzulegenden Ende die den Zugang zum inneren Filterhohlraum (23) bildende Öffnung (37) vorhanden ist, die bezüglich Abmessung und Öffnungsform an die Gestalt des sich von der Elementaufnahme (19) weg erstreckenden Aufnahmeteils (43) derart angepasst ist, dass dieser bei in Funktionsposition befindlichem Filterelement (17) die Öffnung (37) passend durchgreift.

9. Filtervorrichtung nach Anspruch 8, **dadurch gekennzeichnet, dass** die Öffnung (37) an einer das Filtermedium (27) einfassenden Endkappe (31) derart gebildet ist, dass der bei der Funktionsposition in den inneren Filterhohlraum (23) ragende Aufnahmeteil (43) die Öffnung (37) passend durchgreift.

10. Filtervorrichtung nach Anspruch 8 oder 9, **dadurch gekennzeichnet, dass** die Endkappe (31) den Aufnahmeraum (39) aufweist, der sich von der Öffnung (37) für den Eintritt des Aufnahmeteils (43) in den inneren Filterhohlraum (23) erstreckt und den Aufnahmeteil (43) hülsenartig umgibt.

11. Filtervorrichtung nach einem der Ansprüche 8 bis 10, **dadurch gekennzeichnet, dass** die Öffnung (37) des Aufnahmedomes (35) in Anpassung an die Querschnittsform des sie durchgreifenden Teils des Dornes (43) von Öffnungsrändern begrenzt ist, die Teile der Seiten (47) eines Quadrats definieren.

## Claims

1. A filter device having a filter housing (1) which accommodates at least one filter element (17) having an inner filter cavity (23) surrounded by a filter medium (27), there being within the housing (1) an element retainer (19) that interacts with the filter element (17) when the latter is in the functional position, the element retainer (19) having a projecting retaining part (43) the outer form of which is matched to the shape of an opening (37) which is located at the end of the respective filter element (17) that is to be secured to the element retainer (19) such that the retaining part (43) fits through the opening (37) of the filter element (17) when the latter is in the functional position, **characterised in that** the retaining part is in the form of a spike (43) and the filter element (17) has a retaining space (39) in the manner of a dome (35), that the spike (43) and the retaining space (39) respectively have planar surface parts (45) and that these planar surface parts (45) of the spike (43) converge towards one end (49) in a way that corresponds to the taper of the retaining space (39) so that when the spike (43) is accommodated within the retaining space (39) inner surfaces (51) of the dome (35) fit against the planar surface parts (45) of the spike (43).

2. The filter device according to Claim 1, **characterised in that** the spike (43) has planar surface parts (45) around the circumference which define a cross-sectional shape with four straight sides (47) that are inscribed in a square.

3. The filter device according to either of the preceding claims, **characterised in that** the spike (43) is rotatably mounted on a shaft (65) that is located on the element retainer (19), which shaft extends into a central bore (61) of the spike.

4. The filter device according to Claim 3, **characterised in that** the shaft (65) has a collar (81) which secures the spike (43) resting against it against any axial movement that is directed away from the respective filter element (17).

5. The filter device according to Claim 3 or 4, **characterised in that** a snap ring (78) positioned on the shaft (65) together with a groove (77) positioned in the central bore (61) of the spike (43) protects the latter from lifting from the shaft (65).

6. The filter device according to any of Claims 3 to 5, **characterised in that** the shaft (65) is screwed into a closeable oil discharge opening (9) of the filter housing (1).

7. The filter device according to any of Claims 3 to 6, **characterised in that** the shaft (65) has an internal fluid path (87) between the outside of the collar (81) and the oil discharge opening (9) of the housing (1).

8. The filter device according to any of the preceding claims, comprising a filter element that can be secured to the element retainer (19) of the respective filter housing (1) and that has the filter medium (27) that surrounds the inner filter cavity (23), **characterised in that** at the end that is to be secured to the element retainer (19), there is the opening (37) that forms the access to the inner filter cavity (23) and which is matched in terms of dimensions and opening shape to the form of the retaining part (43) extending away from the element retainer (19) such that the accommodating part (43) fits through the opening (37) when the filter element (17) is in the functional position.

9. The filter device according to Claim 8, **characterised in that** the opening (37) is formed on an end cap (31) that frames the filter medium (27) such that retaining part (43) which extends into the inner filter cavity (23) when in the functional position fits through the opening (37).

10. The filter device according to Claim 8 or 9, **characterised in that** the end cap (31) has the retaining space (39) which extends from the opening (37) for the entry of the retaining part (43) into the inner filter cavity (23) and surrounds the retaining part (43) like a sleeve.

11. The filter device according to any of Claims 8 to 10, **characterised in that** the opening (37) of the retaining dome (35) is delimited by rims around the opening that are matched to the shape of the cross-section of the part of the spike (43) that fits through the latter, which opening rims define parts of the sides (47) of a square.

## Revendications

1. Dispositif de filtration, comprenant une enveloppe (1) de filtre, qui reçoit au moins un élément (17) de filtre, qui a une cavité (23) intérieure de filtre entourée d'un milieu (27) filtrant, dans lequel il y a dans l'enveloppe (1) un logement (19) d'élément, qui coopère avec l'élément (17) de filtre se trouvant en position de fonctionnement, le logement (19) d'élément ayant une partie (43) en saillie, dont la forme extérieure est adaptée à la forme d'une ouverture (37), qui se trouve à l'extrémité, se fixant au logement (19) d'élément, de l'élément (17) de filtre concerné, de manière à ce que la partie (43) du logement passe, en s'y adaptant, dans l'ouverture (37) de l'élément (17) de filtre se trouvant en position de fonctionnement, **caractérisé en ce que** la partie du logement a la forme d'un mandrin (43) et l'élément (17) de filtre a un espace (39) de réception, à la manière d'un mandrin (35), **en ce que** le mandrin (43) et l'espace (39) de réception ont chacun des parties (45) de surface planes et **en ce que** ces parties (45) de surface planes du mandrin (43) convergent en une extrémité (49), d'une façon correspondant au rétrécissement de l'espace (39) de réception, de manière à ce que, lorsque le mandrin (43) est reçu dans l'espace (39) de réception, des surfaces (51) intérieures du mandrin (35) s'appliquent de manière adaptée aux parties (45) de surface planes du mandrin (43).

2. Dispositif de filtration suivant la revendication 1, **caractérisé en ce que** le mandrin (43) a, sur le pourtour, des parties (45) de surface planes, qui définissent une forme de section transversale par quatre côtés (47) droits inscrits dans un carré.

3. Dispositif de filtration suivant l'une des revendications précédentes, **caractérisé en ce que** le mandrin (43) est monté tournant sur un arbre (65), qui se trouve sur le logement (19) d'élément et qui s'étend dans un alésage (61) centrale du mandrin (43).

4. Dispositif de filtration suivant la revendication 3, **caractérisé en ce que** l'arbre (65) a un collet (81), qui empêche le mandrin (43) s'y appliquant de s'éloigner axialement de l'élément (17) de filtre concerné.

5. Dispositif de filtration suivant la revendication 3 ou 4, **caractérisé en ce qu'**un jonc (78), se trouvant sur l'arbre (65), empêche, ensemble avec une rainure (77) se trouvant dans l'alésage (61) centrale du mandrin (43), celui-ci de se soulever de l'arbre (65).

6. Dispositif de filtration suivant l'une des revendications 3 à 5, **caractérisé en ce que** l'arbre (65) est vissé dans une ouverture (9) d'évacuation d'huile, pouvant être fermée, de l'enveloppe (1) du filtre.

7. Dispositif de filtration suivant l'une des revendications 3 à 6, **caractérisé en ce que** l'arbre (65) a un trajet (87) intérieur de fluide entre le côté extérieur du collet (81) et l'ouverture (9) d'évacuation d'huile de l'enveloppe (1).

8. Dispositif de filtration suivant l'une des revendications précédentes, comprenant un élément de filtre, qui peut être fixé au logement (19) d'élément de l'enveloppe (1) de filtre concernée et qui a un milieu (27) filtrant entourant la cavité (23) intérieure de filtre, **caractérisé en ce qu'**à l'extrémité fixée sur le logement (19) de filtre, il y a l'ouverture (37), qui forme l'accès à la cavité (23) intérieure de filtre et qui, en ce qui concerne la dimension et la forme, est adaptée à la forme de la partie (43) de réception s'éloignant du logement (19) d'élément, de manière à ce que cette partie passe, lorsque l'élément (17) de filtre se trouve en position de fonctionnement, d'une manière adaptée dans l'ouverture (37).

9. Dispositif de filtration suivant la revendication 8, **caractérisé en ce que** l'ouverture (37) est formée sur une coiffe (31) d'extrémité, qui enchâsse le milieu (27) filtrant, de manière à ce que la partie (43) de réception, pénétrant en la position de fonctionnement dans la cavité (23) intérieure du filtre, passe de manière adaptée dans l'ouverture (37).

10. Dispositif de filtration suivant la revendication 8 ou 9, **caractérisé en ce que** la coiffe (31) d'extrémité a l'espace (39) de réception, qui s'étend de l'ouverture (37), pour l'entrée de la partie (43) de réception dans la cavité (23) intérieure de filtre et qui entoure, à la manière d'un manchon, la partie (43) de réception.

11. Dispositif de filtration suivant l'une des revendications 8 à 10, **caractérisé en ce que** l'ouverture (37) du mandrin (35) de réception est, en adaptation à la forme de section transversale de la partie du mandrin (43) qui y passe, délimitée par des bords d'ouverture, qui définissent des parties des côtés (47) d'un carré.
